# EUROPÄISCHE PATENTSCHRIFT

(11) **EP 3 513 256 B1**
(45) Veröffentlichungstag und Bekanntmachung des Hinweises auf die Patenterteilung: **08.07.2020**
(21) Anmeldenummer: 17777500.4
(22) Anmeldetag: 14.09.2017
(51) Int. Cl.: G05B 5/01

(54) **REGELEINRICHTUNG UND VERFAHREN**
CONTROL DEVICE AND METHOD
DISPOSITIF DE RÉGULATION ET PROCÉDÉ

(30) Priorität: 16.09.2016 EP 16189313; 09.08.2017 DE 102017213893
(43) Veröffentlichungstag der Anmeldung: 24.07.2019
(73) Patentinhaber: Siemens Aktiengesellschaft, 80333 München (DE)
(72) Erfinder: PFEIFFER, Bernd-Markus, 76744 Wörth (DE); LABISCH, Daniel, 76149 Karlsruhe (DE); POHMER, Felix, 76135 Karlsruhe (DE)
(86) Internationale Anmeldenummer: PCT/EP2017/073199
(87) Internationale Veröffentlichungsnummer: WO 2018/050779

(56) Entgegenhaltungen:
- EP-B1- 2 579 112
- STUMPER JEAN-FRANCOIS ET AL: "Deadbeat Control for Electrical Drives: A Robust and Performant Design Based on Differential Flatness", IEEE TRANSACTIONS ON POWER ELECTRONICS, INSTITUTE OF ELECTRICAL AND ELECTRONICS ENGINEERS, USA, Bd. 30, Nr. 8, 1. August 2015 (2015-08-01) , Seiten 4585-4596, XP011574675, ISSN: 0885-8993, DOI: 10.1109/TPEL.2014.2359971 [gefunden am 2015-03-05]

## Beschreibung

Die Erfindung betrifft eine Regeleinrichtung und ein Regelungsverfahren.

Bei der Regelung eines Prozesses wird in Abhängigkeit von einer Regelabweichung zwischen einer Führungsgröße (Sollwert) und einer Regelgröße (Istwert) über eine Stellgröße in den Prozess eingegriffen, um die Regelabweichung zu minimieren. Die Stellgröße wird von einem Regler aus der ihm zugeführten Regelabweichung erzeugt, wobei der Regler über ein Stellglied den Prozess steuert. Die Regelgröße kann von Störgrößen beeinflusst sein. Oft wird zwischen einer von dem Regler für die Stelleinrichtung erzeugten Steuergröße, und der Stellgröße unterschieden, mit der die Stelleinrichtung auf den Prozess (Regelstrecke) wirkt. Im Folgenden wird diese Unterscheidung nicht getroffen, d. h. Steuergröße und Stellgröße werden vereinfacht gleichgesetzt.

In technischen Anlagen gibt es Anwendungen für Regelungen, bei denen die Regelgröße nicht exakt auf einem Sollwert, sondern nur innerhalb definierter Grenzen gehalten werden soll. Ein Beispiel hierfür ist die Pufferstandsregelung, bei der es sich um eine Füllstandsregelung für einen Pufferbehälter handelt, in dem der Füllstand nicht exakt, sondern innerhalb definierter Grenzen gehalten werden soll. Der Füllstand wird über ein Ventil als Stellglied im Ablauf geregelt. Der Zulauf stellt eine Störgröße dar. Solche Regelungen mit Regelgrößen-Totzone haben den Vorteil, dass innerhalb der Totzone keine Stellgliedaktivität stattfindet und dadurch der Energieverbrauch und Verschleiß des Stellglieds verringert werden kann.

Zur Realisierung der Totzone ist es bekannt, dem Regler ein Regler-Totzonenglied vorzuschalten. Dies führt jedoch bisher meist zu einer Verschlechterung der Regelgüte, weil der exakte Sollwert nur mit einem von der Totzonenbreite abhängigen Offset erreicht wird.

Um eine Verbesserung bei der Reduzierung von Stelleingriffen und ein günstigeres Regelverhalten zu erreichen, wird in der EP 2 579 112 B1 eine Regeleinrichtung vorgeschlagen, bei der das dem Regler vorgeschaltete Regler-Totzonenglied deaktivierbar und wieder aktivierbar ist, wobei die dem Regler zugeführte Regelabweichung im aktiven Zustand des Regler-Totzonenglieds von der Regler-Totzone beeinflusst und im inaktiven Zustand unbeeinflusst ist. Wenn die Regelabweichung einen ersten Schwellenwert (der gleich der Totzonengrenze sein kann) überschreitet, wird das Totzonenglied deaktiviert und erst dann wieder aktiviert, wenn die Regelabweichung einen zweiten Schwellenwert, der kleiner als der erste Schwellenwert ist, unterschreitet. Bezüglich weiterer Ausgestaltungen und Vorteile des bekannten Totzonenglieds wird auf die EP 2 579 112 B1 verwiesen.

Ein Nachteil der Totzonen-Regelung besteht darin, dass Störgrößen schlechter ausgeregelt werden, weil die Regelgröße zuerst die Totzone verlassen muss, um die Regelung zu aktivieren und der Störgröße entgegenzuwirken.

Stumper Jean-Francois et al: "Deadbeat Control for Electrical Drives: A Robust and Performant Design Based on Differential Flatness", IEEE TRANSACTIONS ON POWER ELECTRONICS, INSTITUTE OF ELECTRICAL AND ELECTRONICS ENGINEERS, USA, Bd. 30, Nr. 8, 1. August 2015, Seiten 4585-4596, offenbart einen Dead-Beat Regler für elektrische Antriebe. Ein Dead-Beat Regler ist ein zeitdiskreter Regler, der die Regelstrecke in so wenigen Abtastschritten wie möglich in einen neuen Sollwert überführt. Da der Dead-Beat Regler im Unterschied zu einem PI-Regler keinen integrierenden Anteil aufweist, wird zur Kompensation von stationären Offsets der von dem Regler erzeugten Stellgröße eine geschätzte Störgröße aufgeschaltet.

Gemäß der Erfindung wird dieses Problem durch die in Anspruch 1 angegebene Regeleinrichtung und das in Anspruch 6 angegebene Regelungsverfahren gelöst, von denen vorteilhafte Weiterbildungen in den Unteransprüchen angegeben sind.

Gegenstand der Erfindung ist nun eine Regeleinrichtung für einen Prozess, die dazu ausgebildet ist, in Abhängigkeit von einer Regelabweichung zwischen einer Führungsgröße und einer von einer Störgröße beeinflussten Regelgröße über eine Stellgröße in den Prozess einzuwirken,
- mit einem Regler, der die Stellgröße aus der ihm zugeführten Regelabweichung erzeugt,
- mit einem dem Regler vorgeschalteten und durch eine Steuereinrichtung aktivier- und deaktivierbaren Regler-Totzonenglied, in dessen aktivem Zustand die über das Regler-Totzonenglied geführte Regelabweichung von einer Regler-Totzone beeinflusst und im inaktiven Zustand unbeeinflusst ist, und das deaktiviert wird, wenn die Regelabweichung einen ersten Schwellenwert überschreitet, und wieder aktiviert wird, wenn die Regelabweichung einen zweiten Schwellenwert, der kleiner als der erste Schwellenwert ist, unterschreitet, und
- mit einem ein Tiefpassfilter und ein diesem nachgeordnetes Störgrößen-Totzonenglied enthaltenden Aufschaltglied, das aus der Störgröße eine Hilfsstellgröße erzeugt und diese auf die Stellgröße aufschaltet.

Gegenstand der Erfindung ist ferner ein Regelungsverfahren für einen Prozess, um eine von einer Störgröße beeinflusste Regelgröße mit einer zulässigen Schwankungsbreite auf eine Führungsgröße zu regeln, wobei
- ein Regler aus der ihm zugeführten Regelabweichung eine Stellgröße erzeugt,
- ein dem Regler vorgeschaltetes und eine Regler-Totzone zur Festlegung der zulässigen Schwankungsbreite aufweisendes Regler-Totzonenglied deaktiviert wird, wenn die Regelabweichung einen ersten Schwellenwert überschreitet, wobei in dem deaktivierten Zustand die dem Regler geführte Regelabweichung von der Regler-Totzone unbeeinflusst ist, und das Regler-Totzonenglied wieder aktiviert wird, wenn die Regelabweichung einen zweiten Schwellenwert, der kleiner als der erste Schwellenwert ist, unterschreitet, wobei in dem aktivierten Zustand die dem Regler geführte Regelabweichung von der Regler-Totzone beeinflusst ist, und
- die Störgröße gemessen und über ein Tiefpassfilter und ein diesem nachgeordnetes Störgrößen-Totzonenglied als Hilfsstellgröße auf die Stellgröße aufgeschaltet wird.

Während innerhalb der Totzone die Regelung deaktiviert bleibt, nimmt eine Änderung der Störgröße direkten Einfluss auf die Stellgröße, so dass messbaren Störungen wesentlich schneller entgegengewirkt und so im besten Fall ein Verlassen der Totzone verhindert werden kann. Indem die aufgeschaltete Störgröße tiefpassgefiltert wird, wird die Stellgliedaktivität reduziert und so vermieden, dass viele kleine Änderungen oder ein Rauschen der Störgröße wieder zu entsprechend vielen Änderungen der Stellgröße führen. Da das Tiefpassfilter in der Störgrößenaufschaltung außerhalb des Rückführzweiges des Regelkreises liegt, hat es keine destabilisierende Wirkung auf den Regelkreis. Die Zeitkonstante des Tiefpassfilters muss so groß gewählt werden, dass sich Rauschen und kleine Schwankungen in der gefilterten Störgröße (bzw. der daraus erzeugten Hilfsstellgröße) nicht mehr bemerkbar machen.

Ein großer Glättungsfaktor zieht jedoch auch eine große Verzögerung mit sich, was wiederum dazu führen kann, dass die beabsichtigte Wirkung der Störgrößenaufschaltung, nämlich eine schnelle Reaktion auf Störungen, abgeschwächt wird. Außerdem kann eine einmalige Änderung einer Störung zu einer zwar langsamen, aber länger andauernden Änderung des tiefpassgefilterten Störsignals führen, so dass sich daraus eine kontinuierliche Stellgliedaktivität ergeben kann. Dies wird in vorteilhafter Weise durch das dem Tiefpassfilter nachgeordnete Störgrößen-Totzonenglied vermieden. In Kombination mit einer eigenen Totzone für die Störgröße kann die Zeitkonstante des Tiefpassfilters wesentlich kleiner gewählt werden. Durch die kleinere Zeitkonstante verringert sich sowohl die Filterwirkung als auch die Zeitverzögerung. Die Störgröße schwankt zwar nach der Tiefpassfilterung weiterhin, jedoch weniger stark als ursprünglich. Die Störgrößen-Totzone hält nun den Wert der Störgrößenaufschaltung konstant, solange die Schwankung der gefilterten Störgröße innerhalb der definierten Grenzen der Totzone stattfindet. Bei entsprechender Parametrierung des Tiefpassfilters und der Störgrößen-Totzone trifft dies für das Rauschen und kleine Schwankungen der Störgröße im Normalbetrieb zu, so dass eine im Mittel konstante Störgröße keine Stellgliedaktivität verursacht. Die Zeitkonstante des Tiefpassfilters sollte dabei so klein gewählt sein, dass eine deutliche Änderung der Störgröße vergleichsweise schnell die Totzone überschreitet und damit in der Störgrößenaufschaltung zur Wirkung kommt.

Da in den allermeisten Fällen die Störgröße im Mittel größer als Null ist bzw. einen von Null verschiedenen Trend aufweist, muss die Lage der Störgrößen-Totzone entsprechend nachgeführt werden. Dies kann durch eine Steuereinrichtung zur Steuerung des Störgrößen-Totzonenglieds erfolgen, die die aktuelle Lage der Störgrößen-Totzone mit der tiefpassgefilterten Störgröße auf Abweichung vergleicht und auf den aktuellen Wert der tiefpassgefilterten Störgröße ändert, wenn die Abweichung ein vorgegebenes Maß übersteigt. Im einfachsten Fall erfolgt dies z. B. dadurch, dass die Lage der Störgrößen-Totzone um den Betrag der halben Totzonenbreite geändert wird, wenn die tiefpassgefilterte Störgröße die Totzone verlässt, so dass der zu diesem Zeitpunkt aktuelle Wert der Störgröße in der Mitte der geänderten Totzone liegt.

In einer vorteilhaften Ausgestaltung der Erfindung sind die Steuereinrichtungen beider Totzonenglieder miteinander gekoppelt, wobei auch das Störgrößen-Totzonenglied durch seine Steuereinrichtung aktivierbar und deaktivierbar ist und für temporär deaktiviert wird, wenn die Regelabweichung die Regler-Totzone verlässt. Verlässt die Regelgröße die Regler-Totzone, wird die Regelung aktiv. Da zu diesem Zeitpunkt eine erhöhte Stellgliedaktivität unvermeidbar ist, kann die Totzone der Störgröße vorübergehend deaktiviert werden. In vorteilhafter Weise können beide Totzonen temporär deaktiviert werden, bis die Regelabweichung sehr klein ist. Durch die Kopplung der Störgrößen-Totzone an die Regler-Totzone kann die Regelgröße schneller wieder zum Sollwert zurückgeführt und der Stellwert schneller wieder in den konstanten Betrieb gebracht werden.

Überschreitet die Störgröße ihre Totzone, so kann die Regler-Totzone ebenfalls temporär deaktiviert werden. Einerseits kann so dem Verlassen der Regler-Totzone vorgebeugt werden, indem die Regelgröße präventiv in die Nähe des Sollwertes zurückgeführt wird. Generell ergeben sich dadurch allerdings auch häufiger Änderungen der Stellgröße. Eine Kopplung der Regler-Totzone an die Störgrößen-Totzone kann in bestimmten Fällen Sinn ergeben, führt jedoch allgemein zu mehr Stellgliedaktivität.

Die erfindungsgemäße Regeleinrichtung kann in vorteilhafter Weise Bestandteil einer Pufferstandsregelung sein, bei der der in einem Pufferspeicher gemessene Füllstand als die Regelgröße, der gemessene Zulauf in den Pufferspeicher als die Störgröße und der Ablauf aus dem Pufferspeicher als die zu stellende Größe herangezogen werden.

Eine weitere vorteilhafte Applikation ist z. B. die pH-Wert-Regelung eines Mediums in einem Behälter durch dosierte Zufuhr eines Neutralisationsmittels, wobei der im Ablauf des Behälters gemessene pH-Wert als Regelgröße y, der im Zulauf gemessene pH-Wert als die Störgröße und die Dosierung des zugeführten Neutralisationsmittels als die zu stellende Größe herangezogen werden.

Weitere Applikationen sind z. B.:
- Die Temperatur-Regelung in einem Rührkesselreaktor mit einem Heiz-/Kühlmantel, wobei zur Temperierung entweder Heißdampf oder Kühlwasser zugeführt wird. Regelgröße ist die Temperatur im Inneren des Rührkesselreaktor und im Falle einer Kaskadenregelung die Temperatur des Heiz-/ Kühlmantels. Störgrößen sind die Zulaufmengen der dem Reaktor zugeführten Haupt-Edukte.
- Die Regelung von Produktfeuchte und Produkttemperatur über die Verstellung von Heißluftmenge und Temperatur in einem Wirbelschichttrockner. Messbare Störgrößen sind hier die Feuchte und der Durchfluss des zu trocknenden Rohstoffes sowie ggf. die Luftfeuchtigkeit der angesaugten Frischluft. Totzonen für die Temperatur und Feuchte sind hier üblich, weil sie mit einem vorgegebenen Spezifikationsbereich für die Produktqualität korrespondieren.
- Die Temperaturregelung an Kopf und Sumpf einer Destillationskolonne über die Vorgabe von Sollwerten für unterlagerte Durchflussregler für Heizdampf und Rücklauf. Störgröße ist die Zulaufmenge in die Kolonne. Totzonen für die Temperatur sind hier üblich, weil sie mit einem Spezifikationsbereich für die Produktqualität (z. B. einem Alkoholgehalt von 39-41% beim Brennen von Schnaps) korrespondieren.

Das Regelungsverfahren, welches mit der Regeleinrichtung durchgeführt werden kann, ist bevorzugt in Software oder einer Kombination von Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil eines Automatisierungsgeräts, durch welches die Regeleinrichtung realisiert ist, oder wird in einem Speicher des Automatisierungsgeräts vorgehalten oder ist in diesen Speicher ladbar, so dass beim Betrieb des Automatisierungsgeräts dieses das Verfahren zur Regelung des Füllstands in einem Pufferspeicher automatisch ausführt.

Im Weiteren wird die Erfindung anhand von Beispielen erläutert, wozu auf die Figuren der Zeichnung Bezug genommen wird; im Einzelnen zeigen:
- Figur 1: ein Blockschaltbild eines Ausführungsbeispiels der erfindungsgemäßen Regeleinrichtung,
- Figur 2: ein Blockschaltbild eines weiteren Ausführungsbeispiels der erfindungsgemäßen Regeleinrichtung mit einem Störgrößen-Totzonenglied,
- Figur 3: ein Beispiel für Anpassung der Lage der StörgrößenTotzone in Bezug auf Störgrößenänderungen,
- Figur 4: ein Beispiel für die erfindungsgemäße Regeleinrichtung als Bestandteil einer Pufferstandsregelung.
- Figur 5: ein Beispiel für Anpassung der Lage der StörgrößenTotzone in Bezug auf Störgrößenänderungen,
- Figur 6: ein Beispiel für die erfindungsgemäße Regeleinrichtung als Bestandteil einer pH-Wert-Regelung und
- Figur 7: ein Beispiel für die erfindungsgemäße Regeleinrichtung als Bestandteil einer Temperatur-Regelung eines Rührkesselreaktors.

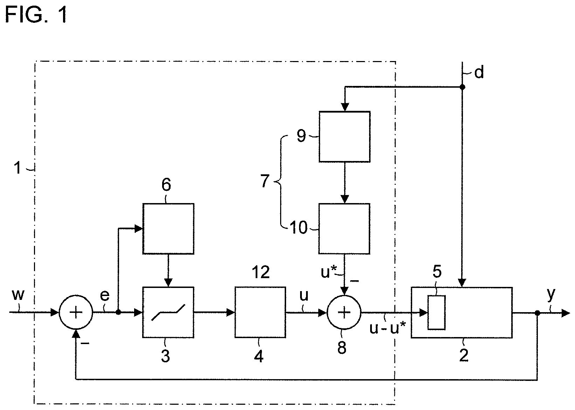

Figur 1 zeigt das Blockschaltbild einer Regeleinrichtung 1 zur Regelung einer Regelgröße y in einem Prozess 2. Der aktuelle Wert (Istwert) der Regelgröße y wird mit einer Führungsgröße (Sollwert) w verglichen. Eine als Differenz zwischen der Führungsgröße w und den Istwerten der Regelgröße y berechnete Regelabweichung e wird über ein Regler-Totzonenglied 3 einem Regler 4 zugeführt, der aus der Regelabweichung e eine Stellgröße u erzeugt und mit dieser über ein Stellglied 5 den Prozess 2 steuert. Die Regelgröße y wird von einer hier messbaren Störgröße d beeinflusst, die auf den Prozess wirkt.

Das Regler-Totzonenglied 3 ist entsprechend dem aus der eingangs genannten EP 2 579 112 B1 bekannten Totzonenglied ausgebildet und durch Parametrierung auf eine zulässige Schwankungsbreite der Regelgröße y eingestellt. Das heißt, die Regelgröße y soll nicht exakt auf den Sollwert w geregelt, sondern nur innerhalb definierter Grenzen gehalten werden. Das Regler-Totzonenglied 3 ist, wie in der EP 2 579 112 B1 beschrieben, mit einer Steuereinrichtung 6 zu seiner automatischen Aktivierung und Deaktivierung versehen, wobei die dem Regler 4 zugeführte Regelabweichung e im aktiven Zustand des Regler-Totzonenglieds 3 von der Regler-Totzone beeinflusst und im inaktiven Zustand unbeeinflusst ist. Das Regler-Totzonenglied 3 wird von der Steuereinrichtung 6 automatisch deaktiviert, wenn die Regelabweichung e einen ersten Schwellenwert überschreitet, und wieder aktiviert, wenn die Regelabweichung e einen zweiten Schwellenwert, der kleiner als der erste Schwellenwert ist, unterschreitet.

Aufgrund der Totzonen-Regelung werden Änderungen der Störgröße d schlechter ausgeregelt, weil die Regelgröße y zuerst die Regelgrößen-Totzone bzw. die Regelabweichung e die Regler-Totzone verlassen muss, um die Regelung zu aktivieren und der Störgröße d entgegenzuwirken. Daher wird in einem Aufschaltglied 7 das aus der gemessenen Störgröße d eine Hilfsstellgröße u* erzeugt und auf die Stellgröße u aufschaltet. Dies kann über eine interne Störgrößenaufschaltung des Reglers 4 oder, wie hier gezeigt, in einem dem Regler 4 nachgeschalteten Summierglied 8 erfolgen. Unter dem hier gezeigten Regler 4 ist insbesondere die eigentliche Regelfunktion, z. B. P-Regelfunktion oder PI-Regelfunktion zu verstehen. In einer breiteren Sichtweise umfasst ein Regler alle Funktionen, die dazu beitragen, aus der Regelabweichung e die Stellgröße u zu erzeugen, und somit z. B. auch die Regler-Totzone oder eine Stellgrößenbeschränkung. Die Additionsstelle 8 muss dann im Hinblick auf die Anti-Windup-Logik des Reglers vor der Stellgrößenbeschränkung liegen, damit die Gesamtstellgröße u - u* korrekt begrenzt wird und der Regelalgorithmus das Erreichen der Grenzen erkennt. Das Aufschaltglied 7 enthält ein Korrekturglied 9 und ein Tiefpassfilter 10.

Das Korrekturglied 9 dient zur Berücksichtigung einer möglichen Nichtlinearität des Einflusses der Störgröße d auf die Regelgröße y. Die Korrektur kann über eine empirisch vorbestimmte Kennlinie erfolgen, wozu z. B. verschiedene Störgrößenwerte eingestellt und dazu die jeweiligen Stellgrößenwerte (einschließlich aufgeschalteter Hilfsstellgröße) ermittelt werden, die erforderlich sind, um die Regelgröße mit den jeweils eingestellten Störgrößenwerten einigermaßen konstant zu halten.

Das Tiefpassfilter 10 dient zur Glättung der ggf. korrigierten Störgröße d, so dass sich Rauschen und kleine Schwankungen in der gefilterten Störgröße bzw. der Hilfsstellgröße u* nicht mehr bemerkbar machen.

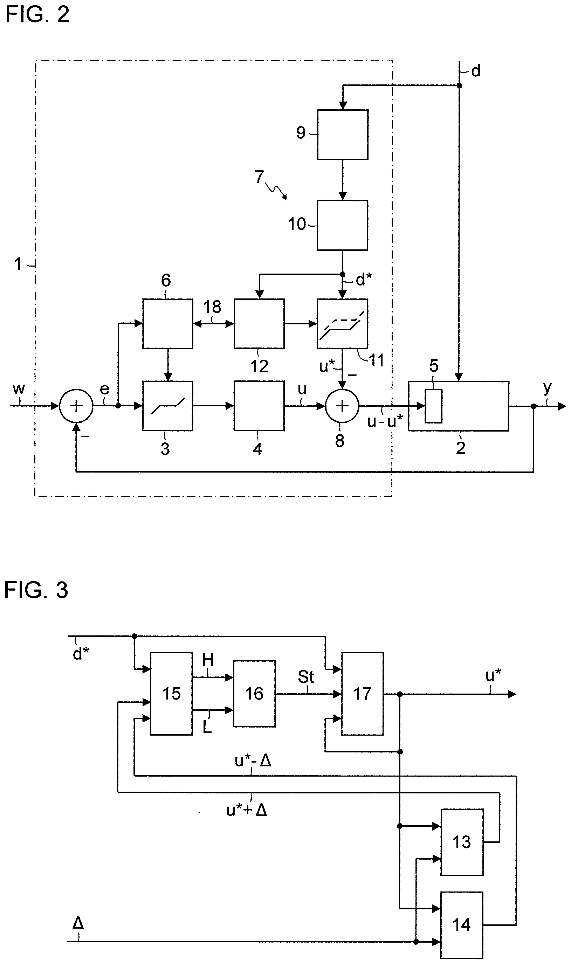

Figur 2 zeigt ein weiteres Ausführungsbeispiel der Regeleinrichtung 1, das sich von dem Beispiel nach Figur 1 darin unterscheidet, dass dem Tiefpassfilter 10 ein Störgrößen-Totzonenglied 11 nachgeschaltet ist. Das Störgrößen-Totzonenglied 11 dient dazu, den Wert der Störgrößenaufschaltung konstant zu halten, solange das Rauschen und die Schwankungen der gefilterten Störgröße d* innerhalb der Grenzen der Störgrößen-Totzone stattfinden. Die Zeitkonstante des Tiefpassfilters 10 kann daher vergleichsweise klein gewählt werden, um die mit der Tiefpassfilterung einhergehende Zeitverzögerung und daraus folgende Verlangsamung der Reaktion der Störgrößenaufschaltung auf Störungen zu verringern. Während also Rauschen und kleine Schwankungen der Störgröße d im Normalbetrieb innerhalb der Störgrößen-Totzone stattfinden, so dass der Wert der Störgrößenaufschaltung konstant bleibt, führt eine deutliche Änderung der Störgröße d vergleichsweise schnell zu einem Überschreiten der Störgrößen-Totzone und wird in der Störgrößenaufschaltung wirksam.

Bei größeren Änderungen der Störgröße d wird die Lage der Störgrößen-Totzone entsprechend nachgeführt, damit die Störgröße d im Mittel innerhalb der Störgrößen-Totzone liegt. Dazu wird das Störgrößen-Totzonenglied 11 von einer weiteren Steuereinrichtung 12 gesteuert, die die aktuelle Lage, z. B. die Mitte, der Störgrößen-Totzone mit der tiefpassgefilterten Störgröße d* vergleicht und auf deren aktuellen Wert ändert, wenn die Abweichung ein vorgegebenes Maß übersteigt.

Figur 3 zeigt ein Beispiel für die Lageanpassung der Störgrößen-Totzone an die Störgröße in vereinfachter Form eines Signalflussplans in der graphischen Programmiersprache CFC (Continuous Function Chart). In einen Addierer 13 wird ein der halben Breite der Störgrößen-Totzone entsprechender Wert Δ einem gespeicherten und aktuell als die Hilfsstellgröße u* ausgegebenen Wert der tiefpassgefilterten Störgröße d* hinzuaddiert und in einem Subtrahierer 14 von der Hilfsstellgröße u* subtrahiert. Die so gebildete Summe u* + Δ die obere Grenze und die Differenz u* - Δ die untere Grenze der aktuellen Störgrößen-Totzone. In einem Vergleicher 15 wird die tiefpassgefilterte Störgröße d* mit jeder der beiden Totzonengrenzen u* + Δ und u* - Δ verglichen. Für die beiden Vergleiche erzeugt der Vergleicher 15 zwei Ausgangssignale H und L, die beide den logischen Wert "0" haben, wenn die tiefpassgefilterten Störgröße d* innerhalb der aktuellen Störgrößen-Totzone liegt, und jeweils den logischen Wert "1" annehmen, wenn die tiefpassgefilterten Störgröße d* die betreffende Grenze überschreitet (z. B. die untere Grenze nach unten überschreitet). Ein ODER-Glied 16 erzeugt ein Steuersignal St mit dem Wert "1", sobald eine der beiden Totzonengrenzen überschritten wird, und steuert damit einen Auswahlglied 17, das im Falle einer Grenzüberschreitung den bis dahin ausgegebenen Wert der Hilfsstellgröße u* durch den aktuellen Wert der tiefpassgefilterten Störgröße d* ersetzt.

Zurück zu Figur 2 sind die Steuereinrichtungen 6, 12 der beiden Totzonenglieder 3, 11 miteinander gekoppelt (Kopplung 18), so dass sie sich gegenseitig steuern können. Wenn die Regelgröße e die Regler-Totzone verlässt, wird die Regelung aktiv, so dass eine erhöhte Stellgliedaktivität stattfindet. ist. Daher deaktiviert die weitere Steuereinheit 11 in diesem Fall die Störgrößen-Totzone vorübergehend. Weiterhin können beide Totzonen temporär deaktiviert werden, bis die Regelabweichung e sehr klein ist. Durch die Kopplung der Störgrößen-Totzone an die Regler-Totzone kann somit die Regelgröße y schneller wieder zum Sollwert w zurückgeführt und der Wert der Stellgröße u - u* schneller wieder in den konstanten Betrieb gebracht werden.

In bestimmten Fällen kann umgekehrt auch die Regler-Totzone temporär deaktiviert werden, wenn die Störgröße d* ihre Totzone überschreitet, um die Regelgröße y vorbeugend in die Nähe des Sollwertes w zurückzuführen und zu vermeiden, dass die Regelabweichung e die Regler-Totzone verlässt.

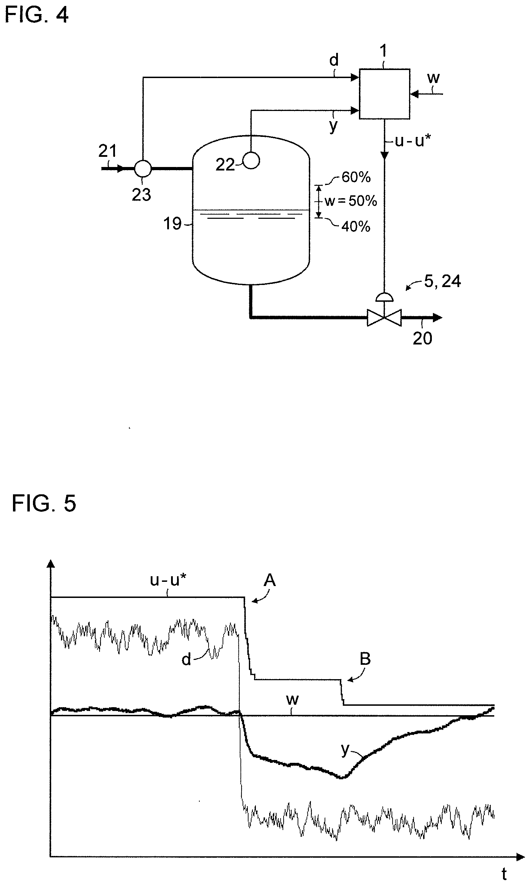

Figur 4 zeigt die Regeleinrichtung 1 als Bestandteil einer Pufferstandsregelung, bei der ein Behälter (z. B. Tank) in einer nicht weiter dargestellten Anlage als Pufferbehälter 19 dient, um in einem Ablauf 20 trotz schwankendem Durchfluss in einem Zulauf 21 eine möglichst gleichmäßige Ablaufmenge zu realisieren. Die Füllmenge des Behälters 19 soll dazu beispielsweise zwischen 40% und 60% Befüllung gehalten werden. Zur Regelung des Füllstands als Regelgröße y werden dessen aktuelle Werte mittels eines Füllstands-Messumformers 22 erfasst und in der Regeleinrichtung 1 mit einem vorgegebenen Füllstands-Sollwert w, beispielsweise 50% Befüllung, verglichen. Weiterhin wird mittels eines Durchfluss-Messumformers 23 der Behälterzulauf gemessen und für die Störgrößenaufschaltung in der Regeleinrichtung 1 verwendet. Über ein das Stellglied 5 bildendes Regelventil 24 wird der Volumenstrom im Ablauf 20 eingestellt.

Figur 5 zeigt beispielhaft die Verläufe des Füllstands als Regelgröße y, des Füllstands-Sollwertes w, des rauschbehafteten Behälterzuflusses als Störgröße d und der Stellung des Regelventils 24 bzw. der Stellgröße u - u* über die Zeit t.

Die Regelung erfolgt mit eine Regler-Totzone von +/- 15% um den Sollwert w und der erfindungsgemäßen Störgrößenaufschaltung mit einer Störgrößen-Totzone von +/- 7% um den aktuell gespeicherten Wert der Störgrößenaufschaltung. Es ist zu erkennen, dass bei einem Störgrößen-Sprung (bei konstantem Sollwert w) die Ventilstellung über lange Zeitabschnitte sehr konstant bleibt. Dem Sprung der Störgröße (Position A) folgt das Ventil 24 schnell und der Füllstand y bleibt innerhalb der Regler-Totzone von +/- 15%. Die Ventilstellung bleibt vorerst konstant, wird kurze Zeit später (Position B) allerdings nochmal angepasst, weil die Störgröße d die Grenze der Störgrößen-Totzone überschreitet.

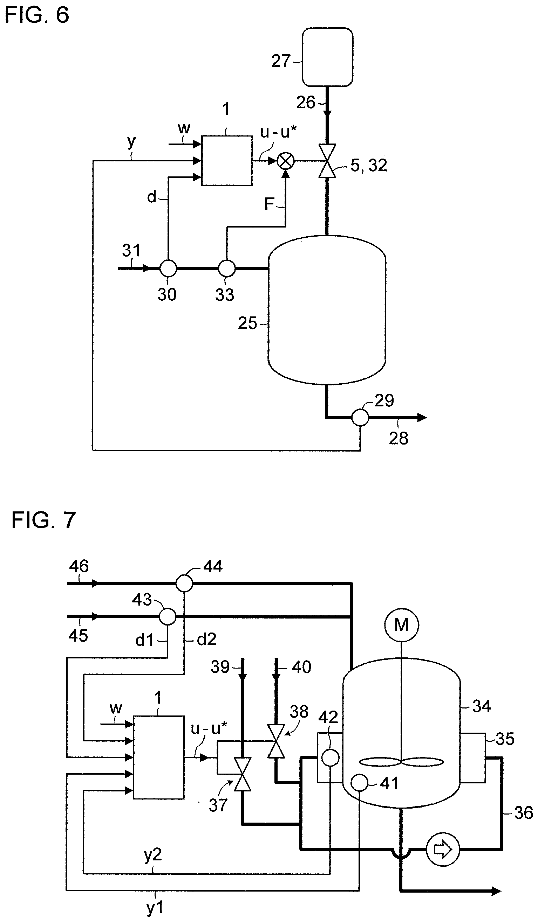

Figur 6 zeigt die Regeleinrichtung 1 als Bestandteil einer pH-Wert-Regelung eines Mediums in einem Behälter 25 durch dosierte Zufuhr eines Neutralisationsmittels 26 aus einem Vorratsbehälter 27. Der im Ablauf 28 des Behälters mittels einer Messsonde 29 gemessene pH-Wert bildet die Regelgröße y. Störgröße d ist der ebenfalls mittels einer Messsonde 30 gemessene pH-Wert im Zulauf 31. Das Stellglied 5 ist ein Regelventil 32 zur Dosierung des zugeführten Neutralisationsmittels 26. Die von der Regeleinrichtung 1 erzeugte Stellgröße u - u* wird mit dem von einem Durchflussmesser 33 gemessenen Durchfluss F im Zulauf 31 multipliziert, bevor sie dem Stellglied 5 zugeführt wird. Zur Vermeidung unnötiger Ventilbewegungen darf der pH-Wert des Mediums im Ablauf 28 innerhalb einer Totzone um den Sollwert w schwanken.

Figur 7 zeigt die Regeleinrichtung 1 als Bestandteil einer Temperatur-Regelung eines Rührkesselreaktors 34 mit einem Heiz-/Kühlmantel (Jacket) 35. Die Temperierung erfolgt durch einen Temperierkreislauf, dem über steuerbare Ventile 37, 38 entweder Heißdampf 39 oder Kühlwasser 40 zugeführt wird. Die Regeleinrichtung 1 ist als Kaskadenregelung aufgebaut und erhält als Regelgrößen y1, y2 die mit Temperatursensoren 41, 42 im Inneren des Rührkesselreaktors 34 und in dem Heiz-/Kühlmantel gemessenen Temperaturen. Störgrößen d1, d2 sind die mittels Durchfluss-Messumformern 43, 44 in den Zuläufen 45, 46 gemessenen Zulaufmengen der Hauptrohstoffe.

## Patentansprüche

1. Regeleinrichtung (1) für einen Prozess (2), die dazu ausgebildet ist, in Abhängigkeit von einer Regelabweichung (e) zwischen einer Führungsgröße (w) und einer von einer Störgröße (d) beeinflussten Regelgröße (y) über eine Stellgröße (u) in den Prozess (2) einzuwirken,
- mit einem Regler (4), der die Stellgröße (u) aus der ihm zugeführten Regelabweichung (e) erzeugt,
- mit einem dem Regler (4) vorgeschalteten und durch eine Steuereinrichtung (6) aktivier- und deaktivierbaren Regler-Totzonenglied (3), in dessen aktivem Zustand die über das Regler-Totzonenglied geführte Regelabweichung (e) von einer Regler-Totzone beeinflusst und im inaktiven Zustand unbeeinflusst ist, und das deaktiviert wird, wenn die Regelabweichung (e) einen ersten Schwellenwert überschreitet, und wieder aktiviert wird, wenn die Regelabweichung (e) einen zweiten Schwellenwert, der kleiner als der erste Schwellenwert ist, unterschreitet, **dadurch gekennzeichnet dass**:
- ein Tiefpassfilter (10) und ein diesem nachgeordnetes Störgrößen-Totzonenglied (11) enthaltenden Aufschaltglied (7), das aus der Störgröße (d) eine Hilfsstellgröße (u*) erzeugt und diese auf die Stellgröße (u) aufschaltet.

2. Regeleinrichtung (1) nach Anspruch 1, **dadurch gekennzeichnet, dass** eine weitere Steuereinrichtung (12) zur Steuerung des Störgrößen-Totzonenglieds (11) vorhanden ist, die die aktuelle Lage der Störgrößen-Totzone mit der tiefpassgefilterten Störgröße (d*) auf Abweichung vergleicht und auf den aktuellen Wert der tiefpassgefilterten Störgröße (d*) ändert, wenn die Abweichung ein vorgegebenes Maß übersteigt.

3. Regeleinrichtung (1) nach Anspruch 1 oder 2, **dadurch gekennzeichnet, dass** das Störgrößen-Totzonenglied (11) durch die weitere Steuereinrichtung (12) aktivierbar und deaktivierbar ist, dass die beiden Steuereinrichtungen (6, 12) miteinander gekoppelt sind und dass die weitere Steuereinrichtung (12) dazu ausgebildet ist, das Störgrößen-Totzonenglied (11) zu deaktivieren, wenn die Regelabweichung (e) die Regler-Totzone verlässt.

4. Regeleinrichtung (1) nach Anspruch 3, **dadurch gekennzeichnet, dass** die Steuereinrichtung (6) dazu ausgebildet ist, das Regler-Totzonenglied (3) zu deaktivieren, wenn die tiefpassgefilterte Störgröße (d*) die Störgrößen-Totzone verlässt.

5. Regelungsverfahren für einen Prozess (2), um eine von einer Störgröße (d) beeinflusste Regelgröße (y) mit einer zulässigen Schwankungsbreite auf eine Führungsgröße (w) zu regeln, wobei
- ein Regler (4) aus der ihm zugeführten Regelabweichung (e) eine Stellgröße (u) erzeugt,
- ein dem Regler (4) vorgeschaltetes und eine Regler-Totzone zur Festlegung der zulässigen Schwankungsbreite aufweisendes Regler-Totzonenglied (3) deaktiviert wird, wenn die Regelabweichung (e) einen ersten Schwellenwert überschreitet, wobei in dem deaktivierten Zustand die dem Regler (4) geführte Regelabweichung (e) von der Regler-Totzone unbeeinflusst ist, und das Regler-Totzonenglied wieder aktiviert wird, wenn die Regelabweichung (e) einen zweiten Schwellenwert, der kleiner als der erste Schwellenwert ist, unterschreitet, wobei in dem aktivierten Zustand die dem Regler (4) geführte Regelabweichung (e) von der Regler-Totzone beeinflusst ist, durch folgende Schritten gekennzeichnet:
- die Störgröße (d) gemessen wird und über ein Tiefpassfilter (10) und ein diesem nachgeordnetes Störgrößen-Totzonenglied (11) als Hilfsstellgröße (u*) auf die Stellgröße (u) aufgeschaltet wird.

6. Regelungsverfahren nach Anspruch 5, **dadurch gekennzeichnet, dass** die aktuelle Lage der Störgrößen-Totzone mit der tiefpassgefilterten Störgröße (d*) auf Abweichung verglichen und auf den aktuellen Wert der tiefpassgefilterten Störgröße (d*) geändert wird, wenn die Abweichung ein vorgegebenes Maß übersteigt.

7. Regelungsverfahren nach Anspruch 5 oder 6, **dadurch gekennzeichnet, dass** das Störgrößen-Totzonenglied (11) deaktiviert wird, wenn die Regelabweichung (e) die Regler-Totzone in dem Regler-Totzonenglied (3) verlässt.

8. Regelungsverfahren nach Anspruch 7, **dadurch gekennzeichnet, dass** das Regler-Totzonenglied (3) deaktiviert wird, wenn die tiefpassgefilterte Störgröße (d*) die Störgrößen-Totzone in dem Störgrößen-Totzonenglied (11) verlässt.

9. Regelungsverfahren nach einem der Ansprüche 5 bis 8, **dadurch gekennzeichnet, dass** zur Pufferstandsregelung der in einem Pufferspeicher (19) gemessene Füllstand als die Regelgröße (y), der gemessene Zulauf (21) in den Pufferspeicher (19) als die Störgröße (d) und der Ablauf (20) aus dem Pufferspeicher (19) als die zu stellende Größe (u) herangezogen werden.

10. Regelungsverfahren nach einem der Ansprüche 5 bis 8, **dadurch gekennzeichnet, dass** zur Temperaturregelung eines mittels eines Heiz- und/oder Kühlmittels temperierten Prozesses zur Verarbeitung oder Behandlung von Stoffen, die in dem Prozess gemessene Temperatur als die Regelgröße (y), der Stoffzulauf als die Störgröße (d) und die Heiz- und/oder Kühlmittelzufuhr als die zu stellende Größe (u) herangezogen werden.

11. Regelungsverfahren nach einem der Ansprüche 5 bis 8, **dadurch gekennzeichnet, dass** zur Regelung der Stoffqualität am Ausgang eines Prozesses zur Behandlung eines Stoffes durch Zugabe eines Zusatzstoffes, ein am Ausgang des Prozesses gemessener Qualitätsparameter des behandelten Stoffes als die Regelgröße (y), der Zulauf des unbehandelten Stoffes zu dem Prozess als die Störgröße (d) und die Zufuhr des Zusatzstoffes als die zu stellende Größe (u) herangezogen werden.

12. Computerprogramm mit durch einen Computer ausführbaren Programmcodeanweisungen zur Implementierung des Verfahrens nach einem der Ansprüche 5 bis 11, wenn das Computerprogramm auf einem Computer ausgeführt wird.

13. Computerprogrammprodukt, insbesondere Datenträger oder Speichermedium, mit einem durch einen Computer ausführbaren Computerprogramm gemäß Anspruch 12.

## Claims

1. Closed-loop control device (1) for a process (2), which device is designed to influence the process (2) by means of a manipulated variable (u) as a function of a control deviation (e) between a reference value (w) and a controlled variable (y) affected by a disturbance variable (d),
- comprising a controller (4), which generates the manipulated variable (u) from the control deviation (e) fed to said controller,
- comprising a controller dead zone element (3), which is connected in front of the controller (4) and can be activated and deactivated by a control unit (6), and in the active state of which, the control deviation (e) fed via the controller dead zone element is influenced by a controller dead zone, and in the inactive state is uninfluenced, and which is deactivated if the control deviation (e) exceeds a first threshold value, and is reactivated once the control deviation (e) falls below a second threshold value, which is smaller than the first threshold value, **characterised in that**:
- an application element (7), which contains a lowpass filter (10) and a disturbance variable dead zone element (11) in front thereof, and from the disturbance variable (d) generates an auxiliary manipulated variable (u*) which it applies to the manipulated variable (u).

2. Closed-loop control device (1) according to claim 1, **characterised in that** there is an additional control unit (12) for controlling the disturbance variable dead zone element (11), which control unit compares the current position of the disturbance variable dead zone with the lowpass-filtered disturbance variable (d*) for a deviation, and changes this position to the current value of the lowpass-filtered disturbance variable (d*) if the deviation exceeds a predetermined amount.

3. Closed-loop control device (1) according to claim 1 or 2, **characterised in that** the disturbance variable dead zone element (11) can be activated and deactivated by the additional control unit (12), that the two control units (6, 12) are coupled together, and that the additional control unit (12) is designed to deactivate the disturbance variable dead zone element (11) if the control deviation (e) leaves the controller dead zone.

4. Closed-loop control device (1) according to claim 3, **characterised in that** the control unit (6) is designed to deactivate the controller dead zone element (3) if the lowpass-filtered disturbance variable (d*) leaves the disturbance variable dead zone.

5. Closed-loop control method for a process (2) for regulating a controlled variable (y) influenced by a disturbance variable (d) to a reference value (w) within a permitted band of variation, wherein
- a controller (4) generates a manipulated variable (u) from the control deviation (e) fed to said controller,
- a controller dead zone element (3), which is connected in front of the controller (4) and comprises a controller dead zone for defining the permitted band of variation, is deactivated if the control deviation (e) exceeds a first threshold value, wherein in the deactivated state, the control deviation (e) fed to the controller (4) is uninfluenced by the controller dead zone, and the controller dead zone element is reactivated once the control deviation (e) falls below a second threshold value, which is smaller than the first threshold value, wherein in the activated state, the control deviation (e) fed to the controller (4) is influenced by the controller dead zone, **characterised by** the following steps:
- the disturbance variable (d) is measured and is applied as an auxiliary manipulated variable (u*) to the manipulated variable (u) via a lowpass filter (10) and a disturbance variable dead zone element (11) in front thereof.

6. Closed-loop control method according to claim 5, **characterised in that** the current position of the disturbance variable dead zone is compared with the lowpass-filtered disturbance variable (d*) for a deviation, and is changed to the current value of the lowpass-filtered disturbance variable (d*) if the deviation exceeds a predetermined amount.

7. Closed-loop control method according to claim 5 or 6, **characterised in that** the disturbance variable dead zone element (11) is deactivated if the control deviation (e) leaves the controller dead zone in the controller dead zone element (3).

8. Closed-loop control method according to claim 7, **characterised in that** the controller dead zone element (3) is deactivated if the lowpass-filtered disturbance variable (d*) leaves the disturbance variable dead zone in the disturbance variable dead zone element (11).

9. Closed-loop control method according to one of claims 5 to 8, **characterised in that** for the purpose of buffer-level control, the level measured in a buffer tank (19) is used as the controlled variable (y), the measured intake (21) into the buffer tank (19) is used as the disturbance variable (d), and the outflow (20) from the buffer tank (19) is used as the variable (u) to be manipulated.

10. Closed-loop control method according to one of claims 5 to 8, **characterised in that** for the purpose of regulating the temperature of a process for processing or treating substances, the temperature of which process is controlled by means of a heating and/or cooling agent, the temperature measured in the process is used as the controlled variable (y), the substance intake is used as the disturbance variable (d), and the supply of heating and/or cooling agent is used as the variable (u) to be manipulated.

11. Closed-loop control method according to one of claims 5 to 8, **characterised in that** for the purpose of regulating the substance quality at the output of a process for treating a substance by adding an additive, a quality parameter of the treated substance, which parameter is measured at the output of the process, is used as the controlled variable (y), the intake of the untreated substance to the process is used as the disturbance variable (d), and the supply of the additive is used as the variable (u) to be manipulated.

12. Computer program comprising program code instructions that can be executed by a computer in order to implement the method according to one of claims 5 to 11 when the computer program is executed on a computer.

13. Computer program product, in particular a data storage medium or a memory medium, containing a computer program according to claim 12 that can be executed by a computer.

## Revendications

1. Dispositif (1) de régulation d'un processus (2), qui est constitué pour, en fonction d'un écart (e) entre une grandeur (w) de référence et une grandeur (y) réglée influencée par une grandeur (d) perturbatrice, agir sur le processus (2) par l'intermédiaire d'une grandeur (u) réglante,
- comprenant un régleur (4) qui produit la grandeur (u) réglante à partir de l'écart (e) de régulation, qui lui est envoyé,
- comprenant un élément (3) de zone morte de régleur, qui est monté en amont du régleur (4), qui peut être activé et désactivé par un dispositif (6) de commande, dans l'état actif duquel l'écart (e) de régulation envoyé par l'intermédiaire de l'élément de zone morte de régleur est influencé par une zone morte de régleur et, dans l'état inactif, n'est pas influencé et qui est désactivé si l'écart (e) de régulation dépasse une première valeur de seuil et réactivé si l'écart (e) de régulation devient inférieur à une deuxième valeur de seuil, qui est plus petite que la première valeur de seuil,
**caractérisé par** :
- un filtre (10) passe-bas et, en aval de celui-ci, un élément (7) d'application, qui contient un élément (11) de zone morte de grandeur perturbatrice en aval de celui-ci, qui produit, à partir de la grandeur (d) perturbatrice, une grandeur (u*) réglante auxiliaire et l'applique à la grandeur (u) réglante.

2. Dispositif (1) de régulation suivant la revendication 1, **caractérisé en ce qu'**il y a un autre dispositif (12) de commande pour la commande de l'élément (11) de zone morte de grandeur perturbatrice, qui compare la position en cours de la zone morte de grandeur perturbatrice à la grandeur (d*) perturbatrice filtrée par le filtre passe-bas pour en connaître l'écart et la modifie à la valeur en cours de la grandeur (d*) perturbatrice filtrée par le filtre passe-bas, si l'écart dépasse une valeur donnée à l'avance.

3. Dispositif (1) de régulation suivant la revendication 1 ou 2, **caractérisé en ce que** l'élément (11) de zone morte de grandeur perturbatrice peut être activé et désactivé par l'autre dispositif (12) de commande, **en ce que** les deux dispositif (6, 12) de commande sont couplés l'un à l'autre et **en ce que** l'autre dispositif (12) de commande est constitué pour désactiver l'élément (11) de zone morte de grandeur perturbatrice, si l'écart (e) de régulation quitte la zone morte de régleur.

4. Dispositif (1) de régulation suivant la revendication 3, **caractérisé en ce que** le dispositif (6) de commande est constitué pour désactiver l'élément (3) de zone morte de régleur, si la grandeur (d*) perturbatrice filtrée par le filtre passe-bas quitte la zone morte de grandeur perturbatrice.

5. Procédé de régulation d'un processus (2) pour réguler sur une grandeur (w) de référence avec une largeur de fluctuation admissible par une grandeur (y) réglée influencée par la grandeur (d) perturbatrice, dans lequel
- un régleur (4) produit une grandeur (u) réglante à partir de l'écart (e) de régulation qui lui est envoyé,
- on désactive un élément (3) de zone morte de régleur, monté en amont du régleur (4) et ayant une zone morte de régleur pour fixer la largeur de fluctuation admissible, si l'écart (e) de régulation dépasse une première valeur de seuil, l'écart (e) de régulation envoyé au régleur (4) n'étant, en l'état désactivé, pas influencé par la zone morte de régleur, et on réactive l'élément de zone morte de régleur si l'écart (e) de régulation devient inférieur à une deuxième valeur de seuil, qui est plus petite que la première valeur de seuil, l'écart (e) de régulation envoyé dans l'état activé au régleur (4) étant influencé par la zone morte de régleur,
**caractérisé par** les stades suivants :
- on mesure la grandeur (d) perturbatrice et, par un filtre (10) passe-bas et par un élément (11) de zone morte de grandeur perturbatrice monté en aval de celui-ci, on l'applique comme grandeur (u*) réglante auxiliaire à la grandeur (u) réglante.

6. Procédé de régulation suivant la revendication 5, **caractérisé en ce que** l'on compare la position en cours de la zone morte de grandeur perturbatrice à la grandeur (d*) perturbatrice filtrée par le filtre passe-bas pour en connaître l'écart et on la modifie à la valeur en cours de la grandeur (d*) perturbatrice filtrée par le filtre passe-bas, si l'écart dépasse une valeur donnée à l'avance.

7. Procédé de régulation suivant la revendication 5 ou 6, **caractérisé en ce que** l'on désactive l'élément (11) de zone morte de grandeur perturbatrice, si l'écart (e) de régulation quitte la zone morte de régleur dans l'élément (3) de zone morte de régleur.

8. Procédé de régulation suivant la revendication 7, **caractérisé en ce que** l'on désactive l'élément (3) de zone morte de régleur, si la grandeur (d*) perturbatrice filtrée par le filtre passe-bas quitte la zone morte de grandeur perturbatrice dans l'élément (11) de zone morte de grandeur perturbatrice.

9. Procédé de régulation suivant l'une des revendications 5 à 8, **caractérisé en ce que**, pour la régulation du niveau mesuré dans un réservoir (19) tampon, on tire parti comme grandeur (u) réglante, pour la grandeur (y) réglée, de l'afflux (21) mesuré dans le récipient (19) tampon et, pour la grandeur (d) perturbatrice, de l'évacuation (20) du récipient (19) tampon.

10. Procédé de régulation suivant l'une des revendications 5 à 8, **caractérisé en ce que**, pour réguler la température d'un processus mis en température à l'aide d'un moyen de chauffage et/ou de refroidissement en vue de traiter ou de transformer des substances, on tire parti de la température mesurée dans le processus comme grandeur (y) réglée, de l'afflux de substance comme grandeur (d) perturbatrice et de l'apport de chauffage et/ou de refroidissement comme grandeur (u) réglante.

11. Procédé de régulation suivant l'une des revendications 5 à 8, **caractérisé en ce que**, pour réguler la qualité de substance à la sortie d'un processus de traitement d'une substance par addition d'un additif, on tire parti d'un paramètre de qualité, mesuré à la sortie du processus, de la substance traitée comme grandeur (y) réglée, de l'afflux de la substance non traitée au processus comme grandeur (d) perturbatrice et de l'apport de l'additif comme grandeur (u) réglante.

12. Programme d'ordinateur ayant des instructions de code de programme pouvant être réalisées par un ordinateur pour la mise en œuvre du procédé suivant l'une des revendications 5 à 11, lorsque le programme d'ordinateur est réalisé sur un ordinateur.

13. Produit de programme d'ordinateur, notamment support de données ou support de mémoire, ayant un programme d'ordinateur suivant la revendication 12 pouvant être réalisé par un ordinateur.
